# EUROPÄISCHE PATENTSCHRIFT

(11) **EP 3 786 026 B1**
(45) Veröffentlichungstag und Bekanntmachung des Hinweises auf die Patenterteilung: **03.04.2024**
(21) Anmeldenummer: 19193735.8
(22) Anmeldetag: 27.08.2019
(51) Int. Cl.: H04L 9/40, B61L 27/20, H04L 9/00, B61L 7/06, B61L 7/08, H04L 9/32

(54) **EISENBAHNTECHNISCHE ANLAGE UND VERFAHREN ZUM STEUERN EINER EISENBAHNTECHNISCHEN ANLAGE**
RAILWAY SYSTEM AND METHOD FOR CONTROLLING SAME
INSTALLATION TECHNIQUE FERROVIAIRE ET PROCÉDÉ DE COMMANDE D'UNE INSTALLATION TECHNIQUE FERROVIAIRE

(43) Veröffentlichungstag der Anmeldung: 03.03.2021
(73) Patentinhaber: Siemens Mobility GmbH, 81739 München (DE)
(72) Erfinder: Braband, Jens, 38106 Braunschweig (DE)
(74) Vertreter: Siemens Patent Attorneys

(56) Entgegenhaltungen:
- DE-A1-102018 001 041
- MICHAEL KUPERBERG ET AL: "Are Smart Contracts and Blockchains Suitable for Decentralized Railway Control?", ARXIV.ORG, CORNELL UNIVERSITY LIBRARY, 201 OLIN LIBRARY CORNELL UNIVERSITY ITHACA, NY 14853, 18. Januar 2019 (2019-01-18), XP081005537,
- NASER FERAS: "REVIEW : THE POTENTIAL USE OF BLOCKCHAIN TECHNOLOGY IN RAILWAY APPLICATIONS : AN INTRODUCTION OF A MOBILITY AND SPEECH RECOGNITION PROTOTYPE", 2018 IEEE INTERNATIONAL CONFERENCE ON BIG DATA (BIG DATA), IEEE, 10. Dezember 2018 (2018-12-10), Seiten 4516-4524, XP033508215, DOI: 10.1109/BIGDATA.2018.8622234 [gefunden am 2019-01-22]

## Beschreibung

Die Erfindung betrifft eine eisenbahntechnische Anlage mit wenigstens einem Kommunikationsnetzwerk, mit mehreren Elementen, die jeweils unterschiedliche Zustände aufweisen können und jeweils einen mit dem Kommunikationsnetzwerk verbundenen passiven Knoten aufweisen, und mit wenigstens einer verteilten Datenbank, die eine Vielzahl von über das Kommunikationsnetzwerk miteinander verbundene aktive Knoten umfasst und die zum Speichern von Zustandsinformationen der Elemente ausgebildet ist.

Weiterhin betrifft die Erfindung ein Verfahren zum Steuern einer eisenbahntechnischen Anlage, die wenigstens ein Kommunikationsnetzwerk, mehrere Elemente und wenigstens eine verteilte Datenbank aufweist, wobei die verteilte Datenbank eine Vielzahl von über das Kommunikationsnetzwerk miteinander verbundene aktive Knoten umfasst, bei dem Zustandsinformationen der Elemente in der verteilten Datenbank gespeichert werden.

Derartige eisenbahntechnische Anlagen und Verfahren sind bekannt geworden, da Eisenbahnbetreiber versuchen die Technik von verteilten Datenbanken zu nutzen, um zukünftige Anlagen konstruktiv einfach und trotzdem sicher zu gestalten. Verteilte Datenbanken können hier beispielsweise Blockchains sein. Bekannte Blockchains, wie beispielsweise Bitcoin oder Ethereum haben allerdings den Nachteil, dass unterschiedliche Ketten in Teilnetzen entstehen können, die unterschiedlichen Zuständen des Sicherungssystems entsprechen. Zwar synchronisieren die unterschiedlichen Zustände nach kurzer Zeit, dies ist aber für eine sicherheitskritische Anlage wie eine eisenbahntechnische Anlage nicht akzeptabel. Weiterhin sind die verwendeten Proof-of-Work Algorithmen nicht echtzeitfähig und daher für große Anlagen wie eine eisenbahntechnische Anlage nur schwer einsetzbar. Ein weiteres Problem stellt der hohe und daher inakzeptable Energieverbrauch von bekannten Blockchains dar. Es muss sichergestellt werden, dass der Inhalt der verwendeten verteilten Datenbank auch dem Zustand des Elements in der Realität entspricht. Dies bedeutet beispielsweise, dass eine Weichenlage, die in der verteilten Datenbank als Zustandsinformation abgelegt ist, auch den Zustand also der Weichenlage in der Realität entspricht.

Eine bekannte eisenbahntechnische Anlage der eingangs genannten Art ist beispielsweise beschrieben in Michael Kuperberg, Daniel Kindler, Sabina Jeschke: "Are Smart Contracts and Blockchains Suitable for Decentralized Railway Control?", PREPRINT Cornell University (2019), online abrufbar unter https://arxiv.org/abs/1901.06236.

Der Erfindung liegt die Aufgabe zugrunde eine eisenbahntechnische Anlage und ein Verfahren der eingangs genannten Art bereitzustellen, die konstruktiv einfach und trotzdem sicher sind.

Für die eisenbahntechnische Anlage der eingangs genannten Art wird die Aufgabe erfindungsgemäß dadurch gelöst, dass wenigstens eines der Elemente mit mehreren der aktiven Knoten so verbunden ist, dass von den verbundenen aktiven Knoten jeweils wenigstens die gespeicherte Zustandsinformation des Elements an das Element übermittelbar ist, und das Element so ausgebildet ist, dass es seinen Zustand ändert, wenn mehrere der von den aktiven Knoten erhaltenen aktuellen Zustandsinformationen vom aktuellen Zustand des Elements abweichen.

Weiterhin wird die Aufgabe für das erfindungsgemäße Verfahren der eingangs genannten Art dadurch gelöst, dass gespeicherte Zustandsinformationen wenigstens eines Elements von mehreren mit dem Element verbundenen aktiven Knoten jeweils an das Element übermittelt werden, und der Zustand von dem Element geändert wird, wenn mehrere der erhaltenen aktuellen Zustandsinformationen vom aktuellen Zustand des Elements abweichen.

Erfindungsgemäß erhält das wenigstens eine Element von mehreren aktiven Knoten der verteilten Datenbank die für dieses Element abgespeicherten Zustandsinformationen in der verteilten Datenbank übermittelt. Durch die Übermittlung der Zustandsinformation von mehreren aktiven Knoten der verteilten Datenbank kann auf Seiten des Elements eine gewisse Sicherheit einer neuen Zustandsinformation geprüft werden bevor diese umgesetzt wird. Es können dadurch Bedingungen festgelegt werden, unter denen der Zustand des Elements verändert werden darf. Dadurch ist eine erhöhte Sicherheit gewährleistet, die die Probleme aus der Technik von verteilten Datenbanken adressiert.

Das erfindungsgemäß verwendete Kommunikationsnetzwerk weist aktive Knoten und passive Knoten auf, wobei die aktiven Knoten durchaus signaltechnisch unsicher ausgebildet sein können und nur die passiven Knoten vorzugsweise signaltechnisch sicher ausgebildet sind. So können die aktiven Knoten ohne Probleme Teil der verteilten Datenbank sein, für die die Sicherheitsanforderung somit nicht gilt. So kann die Sicherheit der eisenbahntechnischen Anlage gewährleistet werden. Ein weiterer Vorteil der erfindungsgemäßen Lösung besteht darin, dass die passiven Knoten sofort und die aktiven Knoten der verteilten Datenbank spätestens in einem nächsten Blockzyklus einen abgestimmten Zustand aufweisen. Dies ist unabhängig davon, welcher Typ von verteilter Datenbank, zum Beispiel Blockchain, verwendet wird.

Die erfindungsgemäße Lösung kann durch vorteilhafte Ausgestaltung weiterentwickelt werden, die im Folgenden beschrieben sind.

So kann das Element so ausgebildet sein, dass es seinen Zustand nur ändert, wenn eine Mehrzahl der erhaltenen aktuellen Zustandsinformationen vom aktuellen Zustand des Elements abweicht. Wenn die Mehrzahl der erhaltenen Zustandsinformationen gleich ist, ist eine ausreichende Sicherheit gegeben, so dass der Zustand des Elements wirklich verändert werden darf.

Somit hat diese Ausgestaltung den Vorteil, dass die Sicherheit der Anlage weiter erhöht wird.

Ferner kann das Element so ausgebildet sein, dass es seinen Zustand ändert, wenn die Anzahl der erhaltenen Zustandsinformationen, die vom aktuellen Zustand des Elements abweichen, größer als die Hälfte der verbundene aktiven Knoten ist. Dies hat den Vorteil, dass die Sicherheit weiter erhöht wird, weil die Wahrscheinlichkeit für einen Fehler in diesem Fall verschwindend gering ist. Zusätzlich kann eine geforderte Anzahl der Elemente mit abweichendem Zustand über eine minimale Hälfte hinaus weiter erhöht werden, um die Sicherheit weiter zu erhöhen.

Um eine Information über einen veränderten Zustand des Elements in die verteilte Datenbank zurückfließen zu lassen, kann das Element so ausgebildet sein, dass es seinen aktuellen Zustand an zumindest einige der aktiven Knoten, insbesondere mittels eines Broadcast-Signals, übermittelt.

In einer vorteilhaften Ausgestaltung des erfindungsgemäßen Verfahrens kann der Zustand von dem Element verändert werden, wenn eine Mehrzahl der erhaltenen aktuellen Zustandsinformationen vom aktuellen Zustand des Elements abweichen. Dies hat den oben bereits beschriebenen Vorteil, dass die Sicherheit hierdurch erhöht werden kann.

Ferner kann der Zustand von dem Element geändert werden, wenn die Anzahl der erhaltenen aktuellen Zustandsinformationen, die vom aktuellen Zustand des Elements abweichen, größer als die Hälfte der verbundenen aktiven Knoten ist. Wie ebenfalls oben bereits beschrieben, hat dies den Vorteil, dass die Sicherheit noch einmal erhöht werden kann.

Um geänderte Zustände der Elemente auf einfache Weise in die verteilte Datenbank zurückfließen zu lassen, kann der aktuelle Zustand des Elements an zumindest einige der aktiven Knoten, insbesondere mittels eines Broadcast-Signals, übermittelt werden.

Die Erfindung betrifft auch ein computerimplementiertes Verfahren zum Steuern einer eisenbahntechnischen Anlage mit den Merkmalen des Anspruchs 9. Um dieses computerimplementierte Verfahren konstruktiv einfach und sicher auszugestalten, ist erfindungsgemäß vorgesehen, dass das Verfahren zum Ausführen der Verfahrensschritte von dem obengenannten Verfahren zum Steuern einer eisenbahntechnischen Anlage nach einer der genannten Ausführungsformen ausgebildet ist.

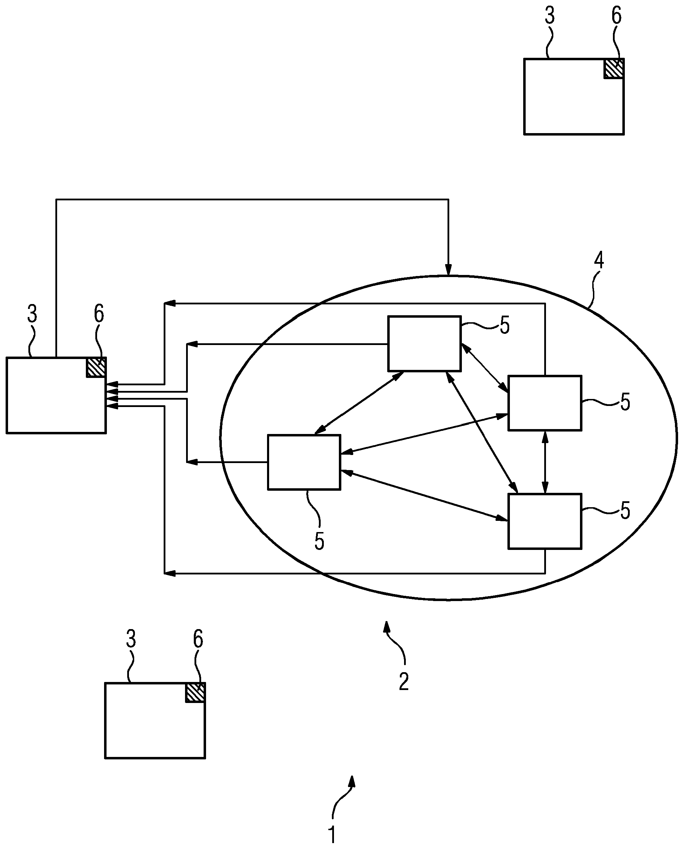

Im Folgenden wird die Erfindung mit Bezug auf die beigefügte Figur beschrieben.

Die Figur zeigt eine schematische Darstellung einer beispielhaften Ausführungsform einer erfindungsgemäßen eisenbahntechnischen Anlage.

Die eisenbahntechnische Anlage 1, in der beispielhaften Ausführungsform in der Figur, umfasste ein Kommunikationsnetzwerk 2, mehrere Elemente 3 und eine verteilte Datenbank 4. Die verteilte Datenbank 4 umfasst eine Vielzahl von aktiven Knoten 5, die über das Kommunikationsnetzwerk 2 miteinander verbunden sind. Die aktiven Knoten 5 sind beispielsweise sogenannte nicht sicherer Rechner, auf denen Zustandsinformationen der Elemente 3 abgelegt sind. Nicht sichere Rechner bedeutet, dass dieser keine nachweisbare funktionale Sicherheit aufweisen muss, beispielsweise SIL 0. Die verteilte Datenbank 4 kann beispielsweise als Blockchain ausgebildet sein und stellt in der beispielhaften Ausführungsform in der Figur das Stellwerk der eisenbahntechnischen Anlage 1 dar. Wenn in der verteilten Datenbank 4 neue Informationen abgespeichert werden, so geschieht dies zunächst auf einem der aktiven Knoten 5. Anschließend wird von diesem aktiven Knoten 5 eine Aktualisierung an alle übrigen aktiven Knoten 5 der verteilten Datenbank 4 übermittelt. Da dies einige Zeit dauert, wenn auch nur eine kurze Zeit, sind die aktiven Knoten signaltechnisch nicht sicher. Zur Verifizierung einer neuen Version, die bei einer Blockchain als Block bezeichnet wird, wird beispielsweise das Proof-of-Authority Verfahren angewendet. Das bei bekannten Blockchains, wie Bitcoin oder Ethereum, angewendete Proof-of-Work-Verfahren ist hier ungünstig und wird daher nicht angewendet.

Die Elemente 3 können auch als Feldelemente bezeichnet werden und sind beispielsweise Weichen, Lichtsignale, Achszähler oder Gleisstromkreise der eisenbahntechnischen Anlage 1. Die Elemente 3 weisen jeweils einen passiven Knoten 6 auf, durch den sie mit dem Kommunikationsnetzwerk 2 verbunden sind. Die passiven Knoten 6 sind als sogenannte sichere Rechner ausgebildet. Das bedeutet, dass sie eine Sicherheitsstufe von SIL 1 bis SIL 4 aufweisen. In der Figur ist eine Kommunikation innerhalb des Kommunikationsnetzwerks 2 durch Pfeile dargestellt. Der Einfachheit halber sind diese Pfeile nur zu einem der Elemente 3 eingezeichnet. Trotzdem findet auch mit den übrigen Elementen 3 die ähnliche Kommunikation statt. Die passiven Knoten 6 sind selbst nicht Teil der verteilten Datenbank 4 und werden daher als passiv bezeichnet. Die Elemente 3 sind jeweils mit mehreren aktiven Knoten 5 verbunden.

Die Elemente 3 haben im Betrieb der eisenbahntechnischen Anlage 1 immer bestimmte Zustände. Beispielsweise kann eine Weiche entweder die eine Weichenstellung oder wenigstens eine weitere Weichenstellung haben, bei Lichtsignalen kann es mehrere Zustände wie beispielsweise ein Halt- oder Fahrtsignal geben. Der aktuelle Zustand eines Elements 3 wird als eine Zustandsinformation in der verteilten Datenbank 4 gespeichert. Konkret heißt das, dass jeder aktive Knoten 5 die aktuelle Zustandsinformation für jedes Elemente 3 abgespeichert hat. Soll nun im Betrieb der eisenbahntechnischen Anlage 1 beispielsweise eine Weiche umgelegt werden, so wird die neue Zustandsinformation des Elements 3 in der verteilten Datenbank 4 und deren aktiven Knoten 5 abgespeichert. Sie dient dadurch als Anweisung zum Steuern des Elements. Die neue Zustandsinformation kann beispielsweise von einer Leitstelle (nicht dargestellt) der eisenbahntechnischen Anlage 1 initiiert und in der verteilten Datenbank 4 abgespeichert werden. Die aktuelle Zustandsinformation wird von den verbundenen aktiven Knoten 5 der verteilten Datenbank 4 zyklisch an das Element 3 übertragen. Wenn eine geänderte Zustandsinformation in der verteilten Datenbank 4 vorliegt, wird dies von dem Element 3 registriert und dessen Zustand von dem Element 3 anschließend angepasst, beispielsweise durch aktives Umlegen der Weiche. Die geänderte Zustandsinformation wird also als Steuerungsanweisung verstanden. Da es, wie zuvor bereits beschrieben, vorkommen kann, dass die aktiven Knoten 5 der verteilten Datenbank 4 zumindest kurzzeitig unterschiedliche Zustandsinformationen abgespeichert haben können, wird das erfindungsgemäße Verfahren angewendet.

Die geänderte Zustandsinformation des Elements 3 wird erfindungsgemäß von mehreren verbundenen Knoten 5 an das Element 3 bzw. seinen passiven Knoten 6 übermittelt. Dadurch kann der passive Knoten 6 des Elements 3 ein Votingverfahren oder Abstimmungsverfahren durchführen, um die nötige Sicherheit herzustellen. Im einfachsten Fall kann dies bedeuten, dass der Zustand des Elements 3 nur verändert wird, wenn mehrere der aktiven Knoten eine gegenüber dem aktuellen Zustand des Elements 3 abweichende Zustandsinformation geschickt haben.

Um die Sicherheit der Entscheidung viel besser zu gewährleisten, ist das Votingverfahren, das bei der beispielhaften Ausführungsform in der Figur in Element 3 bzw. im passiven Knoten 6 angewendet wird, verbessert. So wird eine Veränderung des Zustands nur zugelassen, wenn eine Mehrheit der empfangenen Zustandsinformationen das Gleiche aussagt und vom aktuellen Zustand des Elements abweicht. In einer anderen besonders sicheren Variante wird der Zustand des Elements nur geändert, wenn die Anzahl der erhaltenen Zustandsinformationen, die vom aktuellen Zustand des Elements abweichen, größer als die Hälfte der verbundenen aktiven Knoten 5 ist. Das vorgeschlagene Votingverfahren ist leicht möglich, weil die Anzahl der verbundenen aktiven Knoten 5 in dem Element 3 bekannt ist. Wenn beispielsweise die Anzahl der aktiven Knoten 5 n ist, so kann erfindungsgemäß implementiert werden, dass m>n:2 gilt, wobei m die Anzahl der übereinstimmend geschickten geänderten Zustandsinformationen ist. Der neue Zustand kann vom Element 3 beispielsweise auch nur dann eingestellt werden, wenn eine absolute Mehrheit der aktiven Knoten 5 die geänderte Zustandsinformation geschickt hat. Es kann auch eine qualifizierte Mehrheit gefordert sein.

Wenn der neue Zustand des Elements 3 eingestellt worden ist, meldet das Element 3 bzw. der passive Knoten 6 seinen neuen Zustand an alle erreichbaren aktiven Knoten 5. Dies kann beispielsweise in Form eines Broadcastsignals geschehen. Der aktuelle Zustand des Elements 3 kann auch ohne eine Veränderung zyklisch an die aktiven Knoten 5 gemeldet werden, um ständig einen aktuellen Stand in der verteilten Datenbank 4 sicherzustellen.

## Patentansprüche

1. Eisenbahntechnische Anlage (1)
mit wenigstens einem Kommunikationsnetzwerk (2),
mit mehreren Elementen (3), die jeweils unterschiedliche Zustände aufweisen können und jeweils einen mit dem Kommunikationsnetzwerk (2) verbundenen passiven Knoten (6) aufweisen, und mit wenigstens einer verteilten Datenbank (4), die eine Vielzahl von über das Kommunikationsnetzwerk (2) miteinander verbundene aktive Knoten (5) umfasst und die zum Speichern von Zustandsinformationen der Elemente (3) ausgebildet ist,
**dadurch gekennzeichnet, dass**
wenigstens eines der Elemente (3) mit mehreren der aktiven Knoten (5) so verbunden ist, dass von den verbundenen aktiven Knoten (5) jeweils wenigstens die gespeicherte Zustandsinformation des Elements (3) an das Element (3) übermittelbar ist, und das Element (3) so ausgebildet ist, dass es seinen Zustand ändert, wenn mehrere der von den aktiven Knoten (5) erhaltenen aktuellen Zustandsinformationen vom aktuellen Zustand des Elements (3) abweichen.

2. Eisenbahntechnische Anlage (1) nach Anspruch 1,
**dadurch gekennzeichnet, dass**
das Element (3) so ausgebildet ist, dass es seinen Zustand ändert, wenn eine Mehrzahl der erhaltenen aktuellen Zustandsinformationen vom aktuellen Zustand des Elements (3) abweichen.

3. Eisenbahntechnische Anlage (1) nach Anspruch 1 oder 2,
**dadurch gekennzeichnet, dass**
das Element (3) so ausgebildet ist, dass es seinen Zustand ändert, wenn die Anzahl der erhaltenen aktuellen Zustandsinformationen, die vom aktuellen Zustand des Elements (3) abweichen, größer als die Hälfte der verbundenen aktiven Knoten (5) ist.

4. Eisenbahntechnische Anlage (1) nach einem der oben genannten Ansprüche,
**dadurch gekennzeichnet, dass**
das Element (3) so ausgebildet ist, dass es seinen aktuellen Zustand an zumindest einige der aktiven Knoten (5), insbesondere mittels eines Broadcast-Signals, übermittelt.

5. Verfahren zum Steuern einer eisenbahntechnischen Anlage (1),
die wenigstens ein Kommunikationsnetzwerk (2), mehrere Elemente (3) und wenigstens eine verteilte Datenbank (4) aufweist, wobei die verteilte Datenbank (4) eine Vielzahl von über das Kommunikationsnetzwerk (2) miteinander verbundene aktive Knoten (5) umfasst,
bei dem Zustandsinformationen der Elemente (3) in der verteilten Datenbank (4) gespeichert werden,
**dadurch gekennzeichnet, dass**
gespeicherte Zustandsinformationen wenigstens eines Elements (3) von mehreren mit dem Element (3) verbundenen aktiven Knoten (5) jeweils an das Element (3) übermittelt werden, und der Zustand von dem Element (3) geändert wird, wenn mehrere der erhaltenen aktuellen Zustandsinformationen vom aktuellen Zustand des Elements (3) abweichen.

6. Verfahren nach Anspruch 5,
**dadurch gekennzeichnet, dass**
der Zustand von dem Element (3) geändert wird, wenn eine Mehrzahl der erhaltenen aktuellen Zustandsinformationen vom aktuellen Zustand des Elements (3) abweichen.

7. Verfahren nach Anspruch 5 oder 6,
**dadurch gekennzeichnet, dass**
der Zustand von dem Element (3) geändert wird, wenn die Anzahl der erhaltenen aktuellen Zustandsinformationen, die vom aktuellen Zustand des Elements (3) abweichen, größer als die Hälfte der verbundenen aktiven Knoten (5) ist.

8. Verfahren nach einem der oben genannten Ansprüche 5 bis 7, **dadurch gekennzeichnet, dass**
der aktuelle Zustand des Elements (3) an zumindest einige der aktiven Knoten (5), insbesondere mittels eines BroadcastSignals, übermittelt wird.

9. Computerimplementiertes Verfahren zum Steuern einer eisenbahntechnischen Anlage (1), die wenigstens ein Kommunikationsnetzwerk (2), mehrere Elemente (3) und wenigstens eine verteilte Datenbank (4) aufweist, wobei die verteilte Datenbank (4) eine Vielzahl von über das Kommunikationsnetzwerk (2) miteinander verbundene aktive Knoten (5) umfasst,
wobei das Verfahren zum Ausführen der folgenden Schritte ausgebildet ist:
- Speichern von Zustandsinformationen der Elemente (3) in der verteilten Datenbank (4),
- Übermitteln von gespeicherten Zustandsinformationen wenigstens eines Elements (3) von mehreren mit dem Element (3) verbundenen aktiven Knoten (5) jeweils an das Element (3), und
- Ändern des Zustands von dem Element (3), wenn mehrere der erhaltenen aktuellen Zustandsinformationen vom aktuellen Zustand des Elements (3) abweichen.

10. Verfahren nach Anspruch 9,
**dadurch gekennzeichnet , dass** das Verfahren zum Ausführen der Schritte nach einem der zuvor genannten Ansprüche 6 bis 8 ausgebildet ist.

## Claims

1. Railway system (1)
having at least one communication network (2),
having several elements (3), which may have different states in each case and have a passive node (6) connected to the communication network (2) in each case,
and having at least one distributed database (4), which comprises a plurality of active nodes (5) connected to one another by way of the communication network (2) and which is embodied to store state information of the elements (3), **characterised in that**
at least one of the elements (3) is connected to several of the active nodes (5) so that in each case at least the stored state information of the element (3) can be transferred from the connected active nodes (5) to the element (3),
and the element (3) is embodied so that it changes its state if several of the items of current state information obtained from the active nodes (5) deviate from the current state of the element (3).

2. Railway system (1) according to claim 1,
**characterised in that**
the element (3) is embodied so that it changes its state if a plurality of items of current state information obtained deviate from the current state of the element (3).

3. Railway system (1) according to claim 1 or 2,
**characterised in that**
the element (3) is embodied so that it changes its state if the number of items of current state information obtained, which deviate from the current state of the element (3), is greater than half of the connected active nodes (5).

4. Railway system (1) according to one of the afore-cited claims,
**characterised in that**
the element (3) is embodied so that it transfers its current state to at least some of the active nodes (5), in particular by means of a broadcast signal.

5. Method for controlling a railway system (1),
which has at least one communication network (2), several elements (3) and at least one distributed database (4), wherein the distributed database (4) comprises a plurality of active nodes (5) connected to one another by way of the communication network (2),
in which items of state information of the elements (3) are stored in the distributed database (4),
**characterised in that**
stored items of state information of at least one element (3) are transferred from several active nodes (5) connected to the element (3) to the element (3) in each case, and the state of the element (3) is changed if several of the items of current state information obtained deviate from the current state of the element (3).

6. Method according to claim 5,
**characterised in that**
the state of the element (3) is changed if a plurality of the items of current state information obtained deviate from the current state of the element (3).

7. Method according to claim 5 or 6,
**characterised in that**
the state of the element (3) is changed if the number of items of current state information obtained, which deviate from the current state of the element (3), is greater than half of the connected active nodes (5).

8. Method according to one of the afore-cited claims 5 to 7, **characterised in that**
the current state of the element (3) is transferred to at least some of the active nodes (5), in particular by means of a broadcast signal.

9. Computer-implemented method for controlling a railway system (1), which has at least one communication network (2), several elements (3) and at least one distributed database (4), wherein the distributed database (4) comprises a plurality of active nodes (5) connected to one another by way of the communication network (2),
wherein the method is embodied to execute the following steps:
- storing items of state information of the elements (3) in the distributed database (4),
- transferring items of stored state information of at least one element (3) from a number of active nodes (5) connected to the element (3) to the element (3) in each case, and
- changing the state of the element (3) if several of the items of current state information obtained deviate from the current state of the element (3).

10. Method according to claim 9,
**characterised in that**
the method for executing the steps is embodied according to one of the previously cited claims 6 to 8.

## Revendications

1. Installation (1) de la technique des chemins de fer comprenant au moins un réseau (2) de communication
comprenant plusieurs éléments (3), qui peuvent avoir chacun des états différents et qui ont chacun un noeud (6) passif relié au réseau (2) de communication, et comprenant au moins une base (4) de données répartie, qui comprend une pluralité de noeuds (5) actifs reliés entre eux par le réseau (2) de communication et, qui est constitué pour la mise en mémoire d'informations d'état des éléments (3),
**caractérisée en ce que**
au moins l'un des éléments (3) est relié à plusieurs des noeuds (5) actifs, de manière à ce que respectivement au moins l'information d'état de l'élément (3) mise en mémoire puisse être transmise des noeuds (5) actifs reliés à l'élément (3), et l'élément (3) est constitué, de manière à ce que son état se modifie si plusieurs des informations d'état en cours obtenues par les noeuds (5) actifs s'écartent de l'état en cours de l'élément (3).

2. Installation (1) de la technique des chemins de fer suivant la revendication 1,
**caractérisée en ce que**
l'élément (3) est constitué, de manière à ce que son état varie si une pluralité des informations d'état en cours obtenues s'écartent de l'état en cours de l'élément (3).

3. Installation (1) de la technique des chemins de fer suivant la revendication 1 ou 2,
**caractérisée en ce que**
l'élément (3) est constitué, de manière à ce que son état se modifie si le nombre des informations d'état en cours obtenues, qui s'écartent de l'état en cours de l'élément (3), est plus grand que la moitié des noeuds (5) actifs reliés.

4. Installation (1) de la technique des chemins de fer suivant l'une des revendications précédentes,
**caractérisée en ce que**
l'élément (3) est constitué, de manière à transmettre son état actuel à au moins certains des noeuds (5) actifs, en particulier au moyen d'un signal broadcast.

5. Procédé de commande d'une insolation (1) de la technique des chemins de fer,
qui a au moins un réseau (2) de communication, plusieurs éléments (3) et au moins une base (4) de données répartie, dans lequel la base (4) de données répartie comprend une pluralité de noeuds (5) actifs reliés entre eux par le réseau (2) de communication,
dans lequel on met des informations d'état des éléments (3) dans la base (4) de données répartie,
**caractérisé en ce que**
on transmet des informations d'état mises en mémoire d'au moins un élément (3) de plusieurs noeuds (5) actifs, reliés à l'élément (3), respectivement à l'élément (3) et on modifie l'état de l'élément (3) si plusieurs des informations d'état en cours obtenues s'écartent de l'état en cours de l'élément (3).

6. Procédé suivant la revendication 5,
**caractérisé en ce que** l'
on modifie l'état de l'élément (3) si une pluralité des informations d'état en cours obtenues s'écartent de l'état en cours de l'élément (3).

7. Procédé suivant la revendication 5 ou 6,
**caractérisé en ce que** l'
on modifie l'état de l'élément (3) si le nombre des informations d'état en cours obtenues, qui s'écartent de l'état en cours de l'élément (3), est plus grand que la moitié des noeuds (5) actifs reliés.

8. Procédé suivant l'une des revendications 5 à 7 précédentes,
**caractérisé en ce que** l'
on transmet, en particulier au moyen d'un signal broadcast, l'état en cours de l'élément (3) à au moins certains des noeuds (5) actifs.

9. Procédé mis en œuvre par ordinateur de commande d'une installation (1) de la technique des chemins de fer, qui a au moins un réseau (2) de communication, plusieurs éléments (3) et au moins une base (4) de données répartie, dans lequel la base (4) de données répartie comprend une pluralité de noeuds (5) actifs reliés entre eux par le réseau (2) de communication,
dans lequel le procédé est constitué pour effectuer les stades suivants :
- mise des informations d'état des éléments (3) en mémoire dans la base (4) de données répartie,
- transmission des informations d'état mises en mémoire d'au moins un élément (3) de plusieurs noeuds (5) actifs, reliés à l'élément (3), respectivement à l'élément (3), et
- modification de l'état de l'élément (3) si plusieurs des informations d'état en cours obtenues s'écartent de l'état en cours de l'élément (3).

10. Procédé suivant la revendication 9,
**caractérisé en ce que** le procédé est constitué pour effectuer les stades suivants l'une des revendications 6 à 8 précédentes.
